# EUROPÄISCHE PATENTSCHRIFT

(11) **EP 2 338 111 B1**
(45) Veröffentlichungstag und Bekanntmachung des Hinweises auf die Patenterteilung: **24.02.2016**
(21) Anmeldenummer: 09782572.3
(22) Anmeldetag: 03.09.2009
(51) Int. Cl.: G06F 11/267

(54) **VERFAHREN UND VORRICHTUNG ZUM TESTEN EINES RECHNERKERNS IN EINER MINDESTENS ZWEI RECHNERKERNE AUFWEISENDEN RECHENEINHEIT**
METHOD AND DEVICE FOR TESTING A COMPUTER CORE IN A PROCESSOR COMPRISING AT LEAST TWO COMPUTER CORES
PROCÉDÉ ET DISPOSITIF POUR TESTER UN COEUR DE PROCESSEUR DANS UNE UNITÉ DE CALCUL CONSTITUÉE D'AU MOINS DEUX COEURS DE PROCESSEUR

(30) Priorität: 16.10.2008 DE 102008042894
(43) Veröffentlichungstag der Anmeldung: 29.06.2011
(73) Patentinhaber: Robert Bosch GmbH, 70442 Stuttgart (DE)
(72) Erfinder: MUELLER, Bernd, 71229 Leonberg (DE); AUE, Axel, 70825 Muenchingen (DE)
(86) Internationale Anmeldenummer: PCT/EP2009/061412
(87) Internationale Veröffentlichungsnummer: WO 2010/043448

(56) Entgegenhaltungen:
- DE-A1- 3 629 178
- DE-A1-102006 014 267
- US-B1- 6 560 720

## Beschreibung

### Stand der Technik

Die Erfindung betrifft ein Verfahren zum Testen eines Rechnerkerns in einer mindestens zwei Rechnerkerne aufweisenden Recheneinheit, wobei die Rechnerkerne über ein internes Verbindungssystem miteinander verbunden sind und die beiden Rechnerkerne einen Beitrag zum Betriebsablauf einer Maschine leisten sowie eine Vorrichtung zur Durchführung des Verfahrens.

Integrierte Schaltungen werden auf Ihre Funktionstüchtigkeit hin bereits beim Halbleiterhersteller getestet. Dies gilt insbesondere auch für Rechnerkerne, die aus Sicherheitsgründen auf ihre Funktionsfähigkeit hin überprüft werden müssen. Dies erfolgt nach der Herstellung eines Mikroprozessors auf dem Halbleiterchip im nicht-verbauten Zustand beim Halbleiterhersteller, bei welchem der Rechnerkern noch nicht in ein Steuergerät eingebaut wurde.

Aus der DE 10 2006 014 267 A1 ist ein Verfahren zum Testen zumindest einer in einem Steuergerät eingebauten Recheneinheit bekannt, bei welchem Testdaten mittels einer Steuergeräteschnittstelle zum Testen einer ersten Recheneinheit geladen werden und anschließend die geladenen ersten Testdaten in der Speichereinheit der zweiten Recheneinheit gespeichert werden. Danach wird die erste Recheneinheit durch die zweite Recheneinheit in einen Testmodus geschaltet, in welchem die ersten Testdaten Verwendung finden. Die Testergebnisdaten der ersten Recheneinheit werden mittels der zweiten Recheneinheit auf Plausibilität geprüft.
Durch diese Tests wird aber nur ein bestimmter Fehlererkennungsgrad gewährleistet, da ein solcher Test eine Recheneinheit nur kurze Zeit blockieren darf. Da die Recheneinheit nach dem Test wieder sofort ohne Einschränkungen zur Verfügung stehen muss, sind die verwendbaren Testmuster und somit auch die Fehlerabdeckung eingeschränkt.

### Offenbarung der Erfindung

Der Erfindung liegt die Aufgabe zugrunde, ein Verfahren und eine Vorrichtung zum Testen eines Rechnerkerns anzugeben, bei welchem mit einem minimalen Zeitaufwand eine hohe Fehlerabdeckung erzielt wird.

Das erfindungsgemäße Verfahren zum Testen eines Rechnerkerns weist den Vorteil auf, dass die Testabdeckung erhöht wird und die Tests länger ununterbrochen laufen können, wodurch bessere Testmuster verwendet werden können. Somit werden Hardwarefehler zuverlässig ausgeschlossen. Dadurch, dass während des Betriebsablaufs einer Maschine ein Rechnerkern getestet wird, während der andere seinen normalen Programmablauf abarbeitet, ist es möglich, den Test in Echtzeitsystemen einzusetzen. Die den Betriebsablauf steuernde Software bleibt während des Tests unverändert handlungsfähig und kann sogar zur Generierung der Testmuster verwendet werden, so dass eine größere Vielfalt der Testmuster verwendbar ist.

Vorteilhafterweise läuft in einem Rechnerkem ein Test ab, während gleichzeitig im anderen Rechnerkern ein Programm zur Durchführung des Betriebsablaufes der Maschine abgearbeitet wird. Auf diese Weise wird nicht nur der Betriebsablauf, sondern auch die Sicherheit während des Betriebes der Maschine ununterbrochen gewährleistet, da die Maschine ihre Funktionsfähigkeit während des Testes aufrechterhält.

In einer Weiterbildung wird zur Einleitung des Tests an beide Rechnerkerne eine Testanfrage ausgegeben, wonach nach Zustimmung beider Rechnerkerne zu dieser Testanfrage ein erster Rechnerkern in einen Testmodus versetzt wird und der zweite Rechnerkern den ersten Rechnerkern mit Testdaten beaufschlagt und nach Ablauf des Testes die Korrektheit der Testergebnisse des ersten Rechnerkerns überprüft. Durch die Testanfrage wird sichergestellt, dass der Test zu einem solchen Zeitpunkt in den Betriebsablauf eingefügt wird, dass die Funktionsfähigkeit der Maschine ungestört bleibt. Eine solche Testanfrage lässt sich einfach dadurch realisieren, dass die beiden Rechnerkerne gleichzeitig einer Bedingung zustimmen müssen.

Werden die Testanfragen in einem periodischen System ebenfalls periodisch gestellt, dann ist es möglich, einen günstigen Zeitpunkt für den Test schon zu bestimmen, wenn noch keine Daten gesendet oder empfangen werden (offline).

Vorteilhafterweise löst der Rechnerkern den Test aus, welcher die Zustimmung beider Rechnerkerne zur Testanfrage als erster feststellt. Alternativ wird der Rechnerkern den Test auslösen, welcher zu einem vorgegebenen Zeitpunkt die Antwort der Rechnerkerne auf die Testanfrage auswertet. Dabei wird immer ein Rechnerkern zu einem vorgegebenen Zeitpunkt die Zustimmung der Rechnerkerne zu der Testanfrage prüfen, wodurch sichergestellt wird, dass der Test nach der Zustimmung auch wirklich sofort durchgeführt wird.

In einer Weiterbildung der Erfindung werden zur Durchführung des Testes zunächst die ersten Testdaten aus einem Speicher geladen. Anschließend wird der erste Rechnerkern durch den zweiten Rechnerkern in einen Testmodus geschaltet, indem eine Scan-Kette des ersten Rechnerkerns zugreifbar wird. Danach werden die ersten Testdaten durch die Scan-Kette des ersten Rechnerkerns mittels des zweiten Rechnerkerns geschoben, wodurch die Testergebnisse für den ersten Rechnerkern bereitgestellt werden. Der zweite Rechnerkern prüft dann die für den ersten Rechnerkern erhaltenen Testergebnisse auf Plausibilität. Eine Scan-Kette wird dadurch gebildet, dass interne Flip-Flops des Rechnerkerns zu Schieberegistern verbunden werden. Auf Grund dieser einfachen Methode ist es möglich, auch bei der Prüfung des Rechnerkerns bei laufender Maschine solche Testmuster zu verwenden, wie sie schon vom Halbleiterhersteller unter Produktionsbedingungen bei der Herstellung von Recheneinheiten benutzt werden. Auf die Erstellung neuer Testmuster kann somit weitgehend verzichtet werden. Als Testmuster können die Stuck-at Testmuster und die Path Delay Testmuster genutzt werden, welche eine hohe Testabdeckung der Recheneinheit im Betrieb ermöglichen.

In einer Ausgestaltung werden die ersten Testdaten aus einem internen Speicher der die Rechnerkerne enthaltenen Recheneinheit ausgelesen. Auf zusätzliche Speichereinheiten kann somit verzichtet werden.

Es besteht aber auch die Möglichkeit, dass die Testdaten aus einem anderen Steuergerät der Maschine ausgelesen werden. Auch hier wird der Vorteil genutzt, schon vorhandene Speicher zur Speicherung von Testdaten zu nutzen und auf einen zusätzlichen Speicher zu verzichten.

Vorteilhafterweise variieren die Testdaten zur Durchführung des Tests, wodurch durch die Verwendung unterschiedlicher Testdaten verschiedene Hardwarekomponenten auf ihre Funktionstüchtigkeit überprüft werden können. Dabei gibt es keine hardwarebedingte Einschränkung der Anzahl der Muster. So ist die Anzahl der verwendeten Muster mit der gleichen Hardware allein durch Konfiguration der Software einstellbar. Im Falle von periodisch oder zumindest in vorgegebenen Abständen durchgeführten Tests ist es möglich, bei jeder Durchführung unterschiedliche Testmuster zu verwenden.

In einer Weiterbildung der Erfindung werden während des Ablaufes des Testes auf dem ersten Rechnerkern, zumindest Teile der für den Betriebsablauf der Maschine notwendigen Programmabläufe des getesteten Rechnerkerns von einem anderen Rechnerkern abgearbeitet. Hiermit wird sichergestellt, dass wichtige Programmteile, deren Unterbrechung zu einer Störung im Betriebsablauf der Maschine führen würde, schnell abgearbeitet werden. Der Bediener der Maschine oder die ablaufende Anwendung bemerkt keinen Unterschied im Prozessablauf der Maschine, obwohl der zu testende erste Rechnerkern für den Programmablauf während des Tests nicht zur Verfügung steht.

Bei Programmteilen, deren Abarbeitung keine dringliche Funktions- und/oder Sicherheitsrelevanz für die Maschine darstellt, werden die während des Ablaufes des Testes auf dem ersten Rechnerkern an den ersten Rechnerkern gerichtete Befehlsabläufe aus dem Betriebsablauf der Maschine gespeichert und erst dann abgearbeitet, wenn der Rechnerkern nach dem Test seine normale Arbeitsweise wieder aufgenommen hat.

In einer weiteren Ausgestaltung wird der Test in einem vorgegebenen Zeitfenster des Rechnerkerns durchgeführt. Durch die Auswahl eines günstigen Zeitfensters, in dem der Test durchgeführt wird, kann sowohl der Umkonfigurationsaufwand als auch der Zeitaufwand für die Bearbeitung der nicht bearbeiteten Software, was ja in einem gewissen Maße eine Störung des normalen Ablaufes der Software auf dem entsprechenden Rechnerkern entspricht, minimiert werden.

Besonders einfach kann dies erfolgen, wenn das Zeitfenster bei einem zeitgesteuerten Rechnerkern in eine Leerlaufphase des Rechnerkerns gelegt wird. Somit kann ein besonders ruhiges Zeitfenster für einen aktiven oder einen passiven Test verwendet werden.

Bei einem ereignisgesteuerten Programmablauf im Rechnerkern wird der Test nach Abschluss an ein vorgegebenes Ereignis durchgeführt. Dabei wird sich die Tatsache zu Nutze gemacht, dass das nach einem Ereignis nächste Ereignis zeitlich noch relativ weit entfernt ist, so dass ein Aufruf des Tests nach einem solchen Zeitpunkt sinnvoll ist.

In einer anderen Weiterbildung der Erfindung läuft bei einem Verfahren zum Testen eines Rechnerkerns in einer mindestens zwei Rechenkernen aufweisenden Recheneinheit, wobei die Rechnerkerne über ein internes Verbindungssystem miteinander verbunden sind und beide Rechnerkerne einen Beitrag zum Fahrbetrieb eines Kraftfahrzeuges leisten, in einem Rechnerkern ein Test ab, während gleichzeitig im anderen Rechnerkern ein Programm zur Durchführung des Fahrbetriebes des Kraftfahrzeuges abgearbeitet wird.

Dies hat den Vorteil, dass der Test der zur Verfügung stehenden Hardware nicht nur unter Echtzeitbedingungen sondern auch unter automobilen Randbedingungen durchgeführt werden kann, ohne dass Störungen im Fahrbetrieb des Kraftfahrzeuges auftreten. Der Test erfüllt somit besonders die sicherheitsrelevanten Anforderungen im Kraftfahrzeug. Ein Test des die Recheneinheit mit den Rechnerkernen enthaltenden Steuergerätes in einer Werkstatt ist nicht mehr notwendig oder kann vereinfacht werden, da Fehlerquellen schon während des Fahrbetriebes erkannt und angezeigt werden.

In einer Ausgestaltung testet während des Fahrbetriebes des Kraftfahrzeuges ein Rechnerkern den anderen Rechnerkern. Während der Rechnerkern, der zu diesem Zeitpunkt getestet wird, für die Programmabläufe des Fahrbetriebes nicht zur Verfügung steht, übernimmt der andere Rechnerkern die fahrzeugrelevanten Programmabläufe. Dadurch nimmt der Nutzer des Fahrzeuges die Testabläufe nicht wahr.

Während der Initialisierung des Kraftfahrzeuges werden bei der Durchführung eines stromintensiven Tests für den ersten Rechnerkern die anderen Rechnerkerne vorteilhafterweise in einen stromsparenden Zustand versetzt. Dies kann beispielsweise über eine Absenkung der Taktfrequenz erreicht werden oder über die Unterbindung von bestimmten Softwarezugriffen auf Cache-Speicher.

In einer weiteren Weiterbildung der Erfindung sind bei einer Vorrichtung zum Testen eines Rechnerkerns in einer mindestens zwei Rechenkernen aufweisenden Recheneinheit, wobei die Rechnerkerne über eine internes Verbindungssystem miteinander verbunden sind und beide Rechnerkerne einen Beitrag zum Fahrbetrieb eines Kraftfahrzeuges leisten, Mittel vorhanden, mittels derer in einem Rechnerkern ein Test abläuft, während gleichzeitig im anderen Rechnerkern ein Programm zur Durchführung des Fahrbetriebes des Kraftfahrzeuges abgearbeitet wird.

Diese Vorrichtung erlaubt einen Test während des Einsatzes eines laufenden Steuergerätes, wobei während des Tests der Fahrbetrieb des Kraftfahrzeuges aufrechterhalten wird. Bei diesem Test wird mit minimalem Aufwand eine hohe Fehlerabdeckung erzielt.

### Kurze Beschreibung der Zeichnung

Die Erfindung lässt zahlreiche Ausführungsformen zu. Eine davon soll anhand der in der Zeichnung dargestellten Figuren näher erläutert werden.

Es zeigt:
- Figur 1:: Prinzipdarstellung einer Recheneinheit in einem Steuergerät eines Kraftfahrzeuges
- Figur 2:: schematisches Ablaufdiagramm eines Ausführungsbeispieles des erfindungsgemäßen Verfahrens.

### Ausführungsformen der Erfindung

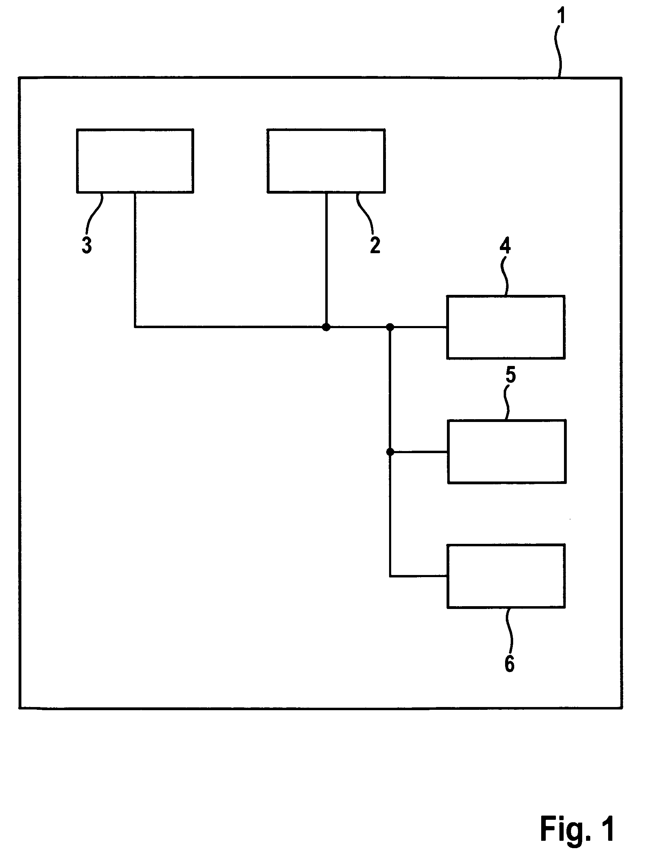

In Figur 1 ist eine Recheneinheit 1 dargestellt, wie sie in einem Steuergerät eines Kraftfahrzeuges Verwendung findet. Die Recheneinheit 1 weist im vorliegenden Fall zwei Rechnerkerne 2 und 3 auf, kann aber bei Bedarf auch mehrere Rechnerkerne aufweisen. Weiterhin sind ein RAM 4, ein ROM 5 und ein Flash-Speicher 6 in der Recheneinheit 1 enthalten. Die Rechnerkerne 2 und 3 sowie RAM 4, ROM 5 und Flash-Speicher 6 kommunizieren untereinander über ein internes Verbindungssystem 7, beispielsweise einen Bus.

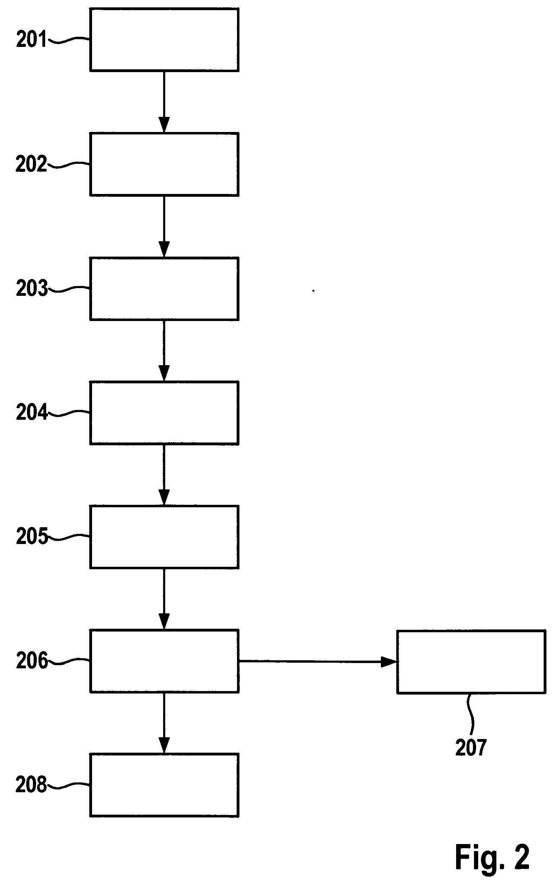

Wie aus Figur 2 ersichtlich, läuft im Schritt 201 das Steuergerät während des Fahrbetriebes des Kraftfahrzeuges. Der Rechnerkern 2 zeichnet hierbei für die Programmabläufe des elektronischen Stabilitätsprogrammes ESP des Kraftfahrzeuges verantwortlich, während der Rechnerkern 3 für die Programmabläufe der Kraftstoffeinspritzung der Motorsteuerung zuständig ist.

Um nun während des Fahrbetriebes festzustellen, ob die Rechnerkerne 2, 3 korrekt funktionieren, wird im Schritt 202 über die Software eine Testanfrage von einem Rechnerkern 2 an den anderen Rechnerkern 3 abgesetzt, um festzustellen, ob zu diesem Zeitpunkt ein Test eines der Rechnerkerne 2, 3 möglich ist. Dabei wird auch vorgeschlagen, welcher Rechnerkern 2, 3 getestet wird und welcher Rechnerkern 2, 3 entsprechend während des Tests die Aufgaben des getesteten Rechnerkerns 2, 3 übernimmt. Dazu gibt es eine Vielzahl von Möglichkeiten. So können Zähler, ein RAM-Element oder SpezialRegister dazu genutzt werden, um festzustellen, ob die beiden Rechnerkerne 2, 3 einer Bedingung gleichzeitig zustimmen.

Im Schritt 203 erfolgt eine Beurteilung der Testanfrage durch die Rechnerkerne 2, 3, ob in der aktuellen Fahrsituation ein Test durchgeführt werden kann. Ein mögliches Kriterium kann sich aus der geforderten Rechenleistung ergeben, welche beispielsweise drehzahlabhängig ist. Der erste Rechnerkern 2 wird beispielsweise die Motordrehzahl prüfen. Befindet sich die Motordrehzahl über einer Drehzahl von 3000 Umdrehungen/ min, wird der Rechnerkern 2 seine Zustimmung zu einem Test verweigern. Liegt die Motorleistung unter der Drehzahl von 3000 Umdrehungen/ min, wird der Rechnerkern 2 dem Test zustimmen.

Ein weiteres mögliches Kriterium ist die Wahrscheinlichkeit eines Interrupts. Diese ist beispielsweise abhängig von den Einspritzungen. Der Rechnerkern prüft in diesem Fall, wann der Zeitpunkt der letzten Kraftstoffeinspritzung war. Ist eine solche Einspritzung gerade erst erfolgt, wird der Rechnerkern dem Test zustimmen, da die nächste Einspritzung zeitlich noch relativ weit entfernt ist. Liegt die letzte Einspritzung aber schon einen gewissen Zeitraum zurück, wird der Rechnerkern die Zustimmung zu einem Test verweigern, da er demnächst wieder mit einer Einspritzung rechnen muss. Wie aus den Ausführungen hervorgeht, hängt es von dem aktuellen Betriebsablauf zum Zeitpunkt der Anfrage ab, ob die Rechnerkerne 2, 3 der Testanfrage zustimmen und welcher der Rechnerkerne 2, 3 getestet wird. Die Kriterien für eine Zustimmung müssen in der Software implementiert sein und sind anwendungsabhängig.

Im Schritt 204 wird festgelegt, wann der Test durchgeführt werden soll. Dieser Schritt ist in expliziter Form dann notwendig, wenn nicht sofort nach der beidseitigen Zustimmung der Test durchgeführt werden soll. So können beispielsweise die erwähnten Zähler, RAM-Elemente oder Spezialregister verwendet werden, um diesen Zeitpunkt im Betrieb festzulegen.

In einem zeitgesteuerten, typischerweise periodischen System ist es möglich, schon offline festzulegen, wann oder in welchen Zeitfenstern der entsprechende Test durchgeführt werden soll. Dann besteht im Betrieb nur noch die Aufgabe, den nächsten solchen Zeitpunkt zu identifizieren.

Vorteilhafterweise wird in einem solchen System sogar die Anfrage aus Schritt 202 gerade zu einem solchen Zeitpunkt gestellt, dass die Testdurchführung sich gleich anschließen kann.

In einem ereignisgesteuerten System sind gute Zeitpunkte direkt nach einem bestimmten Ereignis. Beispielsweise gilt dies dann, wenn aus dem Systemwissen vorhergesagt werden kann, dass das nächste zu verarbeitende Ereignis hinreichend weit entfernt ist.

Die Zeitfestlegung (Schritt 204) wird immer im Betrieb, d.h. online stattfinden. Dabei ist es sehr vorteilhaft, wenn die Bedingungen schon zum Programmierzeitpunkt analysiert werden, so dass im Betrieb nur noch eine möglichst einfache Routine ablaufen muss.

Anschließend wird im Schritt 205 der Test durch den Rechnerkern 2, 3 initiiert, der im Schritt 202 als testender Kern vorgeschlagen wurde. In diesem Fall ist es der Rechnerkern 2, der dem Rechnerkern 3 beispielsweise über einen Interrupt mitteilt, dass er den Test auslöst.

Zur Durchführung des Testes werden die Testdaten zunächst aus einem Flash-Speicher 6 oder dem ROM-Speicher 5 der Recheneinheit 1 geladen. Dabei können verschiedenste Testmuster verwendet werden. Auf die Erstellung neuer Testmuster kann unter Umständen verzichtet werden, wenn die aus der Halbleiterproduktion bekannten Stuck-at Testmuster und die Path Delay Testmuster verwendet werden. Bei dem Stuck-at Test handelt es sich um einen statischen Test, bei welchem der Registerinhalt verändert wird. Das Path Delay Testmuster ist ein dynamischer Test, bei welchem die Verschiebezeit des Registers variiert wird. Ist die Verschiebezeit zu kurz, erfolgt keine Verschiebung der Registerinhalte, was zu einer Fehlererkennung führt.

Nach dem Aufruf der Testdaten wird der Rechnerkern 3 in einen Testmodus geschaltet, in dem die Scan-Kette des Rechnerkerns 3 zugreifbar wird. Danach werden die ersten Testdaten der Testmuster durch die Scan-Kette des Rechnerkerns 3 vorteilhafterweise mittels des Rechnerkerns 2 geschoben, wodurch die Testergebnisse für den Rechnerkern 3 bereitgestellt werden (Schritt 206). Alternativ können die Testmuster auch von einer dafür vorgesehenen speziellen Hardwareeinheit durch die Scan-Kette des Rechnerkerns geschoben werden.

Treffen während des Tests Aufgaben für den zu testenden Rechnerkern 3 ein, so werden diese im Schritt 207 auf ihre Dringlichkeit überprüft. Muss diese Aufgabe schnell ausgeführt werden, wie beispielsweise eine unerwartete Einspritzung bei der Motorsteuerung, wird ein Interrupt an den Rechnerkern 2 weitergeleitet, der diesen nach einer Umkonfiguration ausführt.
Handelt es sich bei der vorliegenden Aufgabe um eine nicht zeitkritische Aufgabe, wird diese im RAM- Speicher 4, vorteilhafterweise über das Betriebssystem, zwischengespeichert, bis der Rechnerkern 3 nach dem Test wieder seine normalen Programmabläufe aufgenommen hat und dann von diesem abgearbeitet wird.

Ist der Test abgeschlossen, prüft beispielsweise der Rechnerkern 2 die für den Rechnerkern 3 erhaltenen Testergebnisse auf Plausibilität und veranlasst gegebenenfalls die Ausgabe eines Fehlersignals (Schritt 208). Alternativ kann die Prüfung auch von einer speziellen Hardwareeinheit vorgenommen werden, die dem Rechnerkern 2 zugeordnet ist.

Das erfindungsgemäße Verfahren beschränkt sich nicht nur auf Recheneinheiten mit zwei Rechnerkernen, sondern kann auch entsprechend bei Recheneinheiten mit mehreren Rechnerkernen durchgeführt werden.

## Patentansprüche

1. Verfahren zum Testen eines Rechnerkerns in einer mindestens einen ersten und einen zweiten Rechnerkern (2,3) aufweisenden Recheneinheit (1), wobei die Rechnerkerne (2,3) über ein internes Verbindungssystem (7) der Recheneinheit (1) miteinander verbunden sind und beide Rechnerkerne (2, 3) einen Beitrag zum Betriebsablauf eines Kraftfahrzeuges leisten, wobei im ersten Rechnerkern (3) ein Test durchgeführt wird, während gleichzeitig im zweiten Rechnerkern (2) ein Programm zur Durchführung des Fahrbetriebes des Kraftfahrzeuges abgearbeitet wird, wozu an beide Rechnerkerne (2, 3) eine Testanfrage gestellt wird, durch die sichergestellt wird, dass eine Störung des Betriebsablaufs des Kraftfahrzeugs minimiert wird, wonach nach Zustimmung beider Rechnerkerne (2, 3) zu dieser Testanfrage der erste Rechnerkern (3) in einen Testmodus versetzt wird und der zweite Rechnerkern (2) den ersten Rechnerkern (3) mit Testdaten beaufschlagt und nach Ablauf des Testes die Korrektheit der Testergebnisse des ersten Rechnerkerns (3) überprüft.

2. Verfahren nach Anspruch 1 **dadurch gekennzeichnet, dass** die Durchführung des Tests des Rechnerkerns (3) von einer dafür vorgesehenen Hardwareeinheit durchgeführt wird.

3. Verfahren nach Anspruch 1 **dadurch gekennzeichnet, dass** die Testanfrage periodisch gestellt wird.

4. Verfahren nach Anspruch 1 **dadurch gekennzeichnet, dass** der Rechnerkern (2) den Test auslöst, welcher die Zustimmung beider Rechnerkerne (2, 3) zur Testanfrage als Erster feststellt.

5. Verfahren nach Anspruch 1 **dadurch gekennzeichnet, dass** der Rechnerkern (2) den Test auslöst, welcher zu einem vorgegebenen Zeitpunkt die Antwort der Rechnerkerne (2, 3) auf die Testanfrage auswertet.

6. Verfahren nach Anspruch 1 **gekennzeichnet durch**
- Laden der ersten Testdaten aus einem Speicher (6);
- Schalten des ersten Rechnerkerns (3) in den Testmodus **durch** den zweiten Rechnerkern (2), indem eine Scan-Kette des ersten Rechnerkerns (3) zugreifbar wird;
- Schieben der ersten Testdaten **durch** die Scan-Kette des ersten Rechnerkerns (3) mittels des zweiten Rechnerkerns (2) zur Bereitstellung der Testergebnisse für den ersten Rechnerkern (3) und;
- Prüfen der für den ersten Rechnerkern (3) erhaltenen Testergebnisse **durch** den zweiten Rechnerkern (2) auf Plausibilität.

7. Verfahren nach Anspruch 6 **dadurch gekennzeichnet, dass** die ersten Testdaten aus einem internen Speicher (6) der die Rechenkerne (2,3) enthaltenden Recheneinheit (1) ausgelesen werden.

8. Verfahren nach Anspruch 7 **dadurch gekennzeichnet, dass** die ersten Testdaten aus einem anderen Steuergerät des Kraftfahrzeuges ausgelesen werden.

9. Verfahren nach Anspruch 6 bis 8 **dadurch gekennzeichnet, dass** die Testdaten zur Durchführung eines Tests variieren.

10. Verfahren nach Anspruch 1 **dadurch gekennzeichnet, dass** während des Ablaufes des Testes auf dem ersten Rechnerkern (3), zumindest Teile der für den Betriebsablauf des Kraftfahrzeuges notwendigen Programmabläufe des getesteten Rechnerkerns (3) von einem anderen Rechnerkern (2) abgearbeitet werden.

11. Verfahren nach Anspruch 1 **dadurch gekennzeichnet, dass** die während des Ablaufes des Testes auf dem ersten Rechnerkern (3) an den ersten Rechnerkern (3) gerichtete Befehlsabläufe aus dem Betriebsablauf des Kraftfahrzeuges gespeichert werden.

12. Verfahren nach Anspruch 1 **dadurch gekennzeichnet, dass** der Test in einem vorgegebenen Zeitfenster des Rechnerkerns (3) durchgeführt wird.

13. Verfahren nach Anspruch 12 **dadurch gekennzeichnet, dass** das Zeitfenster bei einem zeitgesteuerten Rechnerkern (3) in eine Leerlaufphase des Rechnerkerns (3) gelegt wird.

14. Verfahren nach Anspruch 1 oder 2 **dadurch gekennzeichnet, dass** der Test im Anschluss an ein vorgegebenes Ereignis durchgeführt wird.

## Claims

1. Method for testing a computer core in a computing unit (1) having at least a first and a second computer core (2, 3), the computer cores (2, 3) being connected to one another via an internal connecting system (7) of the computing unit (1) and both computer cores (2, 3) contributing to the operating sequence of a motor vehicle, a test being carried out in the first computer core (3), while a program for carrying out the driving mode of the motor vehicle is simultaneously executed in the second computer core (2), for which purpose a test request is sent to both computer cores (2, 3), which test request ensures that a disruption in the operating sequence of the motor vehicle is minimized, after which, following the agreement of both computer cores (2, 3) to this test request, the first computer core (3) is changed to a test mode and the second computer core (2) applies test data to the first computer core (3) and checks the correctness of the test results from the first computer core (3) following the test run.

2. Method according to Claim 1, **characterized in that** the computer core (3) is tested by a hardware unit provided for this purpose.

3. Method according to Claim 1, **characterized in that** the test request is sent periodically.

4. Method according to Claim 1, **characterized in that** the computer core (2) initiates the test which first determines the agreement of both computer cores (2, 3) to the test request.

5. Method according to Claim 1, **characterized in that** the computer core (2) initiates the test which evaluates the response from the computer cores (2, 3) to the test request at a predefined time.

6. Method according to Claim 1, **characterized by**
- loading the first test data from a memory (6);
- switching the first computer core (3) to the test mode by means of the second computer core (2) by virtue of a scan chain of the first computer core (3) becoming accessible;
- shifting the first test data through the scan chain of the first computer core (3) by means of the second computer core (2) in order to provide the test results for the first computer core (3); and
- checking the test results obtained for the first computer core (3) for plausibility by means of the second computer core (2).

7. Method according to Claim 6, **characterized in that** the first test data are read from an internal memory (6) of the computing unit (1) containing the computing cores (2, 3).

8. Method according to Claim 7, **characterized in that** the first test data are read from another control device of the motor vehicle.

9. Method according to Claims 6 to 8, **characterized in that** the test data for carrying out a test vary.

10. Method according to Claim 1, **characterized in that**, during the test run on the first computer core (3), at least parts of the program sequences of the tested computer core (3) which are needed for the operating sequence of the motor vehicle are executed by another computer core (2).

11. Method according to Claim 1, **characterized in that** the command sequences from the operating sequence of the motor vehicle which are directed to the first computer core (3) during the test run on the first computer core (3) are stored.

12. Method according to Claim 1, **characterized in that** the test is carried out in a predefined time window of the computer core (3).

13. Method according to Claim 12, **characterized in that**, in the case of a time-controlled computer core (3), the time window is placed in an idling phase of the computer core (3).

14. Method according to Claim 1 or 2, **characterized in that** the test is carried out after a predefined event.

## Revendications

1. Procédé pour tester un coeur de processeur dans une unité de calcul (1) comprenant au moins des premier et second coeurs de processeur (2, 3), dans lequel les coeurs de processeur (2, 3) sont reliés l'un à l'autre par l'intermédiaire d'un système de liaison interne (7) de l'unité de calcul (1) et les deux coeurs de processeur (2, 3) apportent une contribution au processus de fonctionnement d'un véhicule automobile, dans lequel un test est effectué dans le premier coeur de processeur (3) pendant qu'un programme est simultanément exécuté dans le second coeur de processeur (2) pour mettre en oeuvre la conduite du véhicule, dans le but de quoi une interrogation de test est envoyée aux deux coeurs de processeur (2, 3), au moyen de laquelle il est vérifié qu'une perturbation du processus de fonctionnement du véhicule automobile est minimisée, cela étant suivi par le fait que le premier coeur de processeur (3) est mis dans un mode de test et que le second coeur de processeur (2) envoie des données de test au premier coeur de processeur de test (3) après que les deux coeurs de processeur (2, 3) ont satisfait à ladite interrogation de test et l'exactitude des résultats de test du premier coeur de processeur (3) est vérifiée après l'exécution du test.

2. Procédé selon la revendication 1, **caractérisé en ce que** l'exécution du test du coeur de processeur (3) est effectuée par une unité matérielle prévue à cet effet.

3. Procédé selon la revendication 1, **caractérisé en ce que** l'interrogation de test est envoyée périodiquement.

4. Procédé selon la revendication 1, **caractérisé en ce que** le codeur de processeur (2) déclenche le test qui établit en premier le fait que les deux coeurs de processeur (2, 3) satisfont à l'interrogation de test.

5. Procédé selon la revendication 1, **caractérisé en ce que** le coeur de processeur (2) déclenche le test qui évalue la réponse du coeur de processeur (2, 3) à l'interrogation de test à un instant prédéterminé.

6. Procédé selon la revendication 1, **caractérisé par** :
- le chargement des premières données de test depuis une mémoire (6) ;
- le basculement du premier coeur de processeur (3) dans le mode de test par le second coeur de processeur (2) en rendant accessible une chaîne de balayage du premier coeur de processeur (3) ;
- décaler les premières données de test à travers la chaîne de balayage du premier coeur de processeur (3) au moyen du second coeur de processeur (2) pour fournir les résultats de test concernant le premier coeur de processeur (3) ; et
- vérifier la plausibilité des résultats de test obtenus pour le premier coeur de processeur (3) au moyen du second coeur de processeur (2).

7. Procédé selon la revendication 6, **caractérisé en ce que** les premières données de test sont lues depuis une mémoire interne (6) de l'unité de calcul (1) comportant les coeurs de processeur (2, 3).

8. Procédé selon la revendication 7, **caractérisé en ce que** les premières données de test sont lues depuis un autre appareil de commande du véhicule automobile.

9. Procédé selon les revendications 6 à 8, **caractérisé en ce que** les données de test varient pour l'exécution d'un test.

10. Procédé selon la revendication 1, **caractérisé en ce que**, pendant l'exécution du test sur le premier coeur de processeur (3), au moins certaines parties des séquences de programme nécessaires pour le processus de fonctionnement du véhicule automobile dans le coeur de processeur (3) testé sont exécutées par un autre coeur de processeur (2).

11. Procédé selon la revendication 1, **caractérisé en ce que** les séquences d'instructions destinées au premier coeur de processeur (3) pendant l'exécution du test sur le premier coeur de processeur (3) sont stockées à partir du processus de fonctionnement du véhicule automobile.

12. Procédé selon la revendication 1, **caractérisé en ce que** le test est exécuté dans une fenêtre temporelle prédéterminée du coeur de processeur (3).

13. Procédé selon la revendication 12, **caractérisé en ce que** la fenêtre temporelle est mise en oeuvre au cours d'une phase de fonctionnement à vide du coeur de processeur (3) dans le cas d'un coeur de processeur (3) déclenché temporellement.

14. Procédé selon la revendication 1 ou 2, **caractérisé en ce que** le test est effectué à la suite d'un événement prédéterminé.
